# EUROPEAN PATENT APPLICATION

(11) **EP 4 651 246 A1**
(43) Date of publication of application: **19.11.2025**
(21) Application number: 24832175.4
(22) Date of filing: 05.03.2024
(51) Int. Cl.: H01M 8/04119

(54) **FUEL CELL MEMBRANE HUMIDIFIER HAVING MULTIPLE HUMIDIFICATION MODULES CONNECTED IN PARALLEL**

(30) Priority: 28.06.2023 KR 20230083602
(71) Applicant: Kolon Industries, Inc., Seoul 07793 (KR)
(72) Inventor: KIM, In Ho, Seoul 07793 (KR); KIM, Do Woo, Seoul 07793 (KR); KI, Sung Kwan, Seoul 07793 (KR)
(74) Representative: Vossius & Partner Patentanwälte Rechtsanwälte mbB
(86) International application number: PCT/KR2024/002787
(87) International publication number: WO 2025/005387

(57) **Abstract**

Provided is a fuel cell membrane humidifier having a plurality of humidification modules connected thereto, and including: a first humidification module including a first air inlet on one side thereof, a first air outlet on the other side thereof, and a first mid-case in which at least one humidification membrane is arranged; a second humidification module including a second air inlet on one side thereof, a second air outlet on the other thereof, and a second mid-case in which at least one humidification membrane is arranged; and a connection member including a first coupling hole into which the first humidification module may be inserted and a second coupling hole into which the second humidification module may be inserted.

## Description

### Technical Field

The present disclosure relates to a fuel cell membrane humidifier having multiple humidification modules connected in parallel, and more specifically, to a fuel cell membrane humidifier with multiple humidification modules connected in parallel through a connection member connecting the multiple humidification modules and an end cap coupled to the connection member.

### Background Art

A fuel cell is a power generation cell that generates electricity by combining hydrogen and oxygen with each other. Unlike general chemical cells such as batteries and storage batteries, fuel cells may continue to produce electricity as long as hydrogen and oxygen are supplied, and have the advantage of being twice as efficient as internal combustion engines because there is no heat loss.

A fuel cell system includes a stack, which is an electricity generation assembly of unit fuel cells each consisting of a cathode and an anode, an air supply device for supplying air to the cathode of each fuel cell, and a hydrogen supply device for supplying hydrogen to the anode of each fuel cell.

A polymer fuel cell of the fuel cell system requires adequate moisture to allow an ion exchange membrane of a membrane-electrode assembly (MEA) to function smoothly, and to this end, an air supply device of the fuel cell system is equipped with a humidifier for humidifying air supplied to the fuel cells.

The humidifier humidifies dry air supplied through an air compressor of the air supply device by using moisture in the high-temperature and high-humidity air discharged from the cathode of the fuel cell, and supplies the humidified air to the cathode of the fuel cell.

The humidifier of the fuel cell uses a membrane humidification method. In the membrane humidification type humidifier, membrane humidification is performed through a gas-to-gas moisture exchange method of exchanging high-temperature and high-humidity exhaust gas discharged from the cathode of the fuel cell with dry air supplied through the air compressor. Hollow fiber membranes each having a hollow may be provided inside the membrane humidifier, and moisture exchange between the high-temperature and high-humidity exhaust gas and dry air may be performed through the hollow fiber membranes.

In addition, a fuel cell system requiring high output requires a lot of moisture, and thus, a large-capacity membrane humidifier may be used or a plurality of membrane humidifiers may be connected to be used. However, manufacturing large-capacity membrane humidifiers has a problem in that it is difficult to apply existing components as the designs of the components need to be changed.

In order to solve such a problem, a plurality of membrane humidifiers were conventionally connected through hoses or pipelines. However, if a plurality of membrane humidifiers are connected through hoses or pipelines, there is a problem in that the pressure and heat loss increases and the system configuration becomes complicated. In addition, as multiple membrane humidifiers are connected through hoses or pipelines, there is a problem in that it is difficult to arrange multiple membrane humidifiers in parallel.

### Disclosure

### Technical Problem

To solve the above problems, the present disclosure provides a fuel cell membrane humidifier in which a plurality of humidification modules are connected in parallel through a connection member connecting the plurality of humidification modules and an end cap coupled to the connection member.

### Technical Solution

According to an aspect of the present disclosure, a fuel cell membrane humidifier having a plurality of humidification modules connected thereto, which includes: a first humidification module including a first air inlet on one side thereof, a first air outlet on the other side thereof, and a first mid-case in which at least one humidification membrane is arranged; a second humidification module including a second air inlet on one side thereof, a second air outlet on the other thereof, and a second mid-case in which at least one humidification membrane is arranged; and a connection member including a first coupling hole into which the first humidification module may be inserted and a second coupling hole into which the second humidification module may be inserted.

According to an embodiment of the present disclosure, in the fuel cell membrane humidifier having a plurality of humidification modules connected thereto, one side of the first humidification module including the first air inlet may be inserted into the first coupling hole of the connection member, and one side of the second humidification module including the second air inlet may be inserted into the second coupling hole of the connection member.

According to an embodiment of the present disclosure, the fuel cell membrane humidifier having a plurality of humidification modules connected thereto, includes an end cap including an inner space and an air inlet that is open to the outside while communicating with the inner space, wherein the inner space of the end cap communicates with the first air inlet of the first humidification module and the second air inlet of the second humidification module, and air introduced into the air inlet of the end cap may pass through the inner space and be introduced into the first air inlet of the first humidification module and the second air inlet of the second humidification module.

According to an embodiment of the present disclosure, in the fuel cell membrane humidifier to which a plurality of humidification modules are connected, the other side of the first humidification module including the first air outlet may be inserted into the first coupling hole of the connection member, and the other side of the second humidification module including the second air outlet may be inserted into the second coupling hole of the connection member.

According to an embodiment of the present disclosure, the fuel cell membrane humidifier having a plurality of humidification modules connected thereto, includes an end cap including an inner space and an air outlet that is open to the outside while communicating with the inner space, wherein the inner space of the end cap communicates with the first air outlet of the first humidification module and the second air outlet of the second humidification module, and air discharged from the first air outlet of the first humidification module and the second air outlet of the second humidification module may pass through the inner space and be discharged via the air outlet of the end cap.

According to an embodiment of the present disclosure, in the fuel cell membrane humidifier having a plurality of humidification modules connected thereto, a size of the first coupling hole may be different from a size of the second coupling hole provided in the connection member.

According to an embodiment of the present disclosure, in the fuel cell membrane humidifier having a plurality of humidification modules connected thereto, a thickness of the connection member at a point where the first coupling hole is inserted into the first humidification module may be greater than a thickness of the connection member at a point where the second coupling hole is inserted into the second humidification module.

According to an embodiment of the present disclosure, in the fuel cell membrane humidifier having a plurality of humidification modules connected thereto, first sealing members may be provided between the first coupling hole of the connection member and the first humidification module, and between the second coupling hole of the connection member and the second humidification module, respectively.

According to an aspect of the present disclosure, provided is a fuel cell membrane humidifier having a plurality of humidification modules connected thereto, which includes: a first humidification module including a first wet air inlet and a first wet air outlet, and a first mid-case in which at least one humidification membrane is arranged; a second humidification module including a second wet air inlet and a second wet air outlet, and a second mid-case in which at least one humidification membrane is arranged; and a connection member including a first coupling hole into which the first wet air inlet or the first wet air outlet may be inserted, and a second coupling hole into which the second wet air inlet or the second wet air outlet may be inserted.

According to an embodiment of the present disclosure, the fuel cell membrane humidifier having a plurality of humidification modules connected thereto, includes an end cap including an inner space and a wet air inlet that is open to the outside while communicating with the inner space, wherein the first wet air inlet is inserted into the first coupling hole of the connection member, and the second wet air inlet is inserted into the second coupling hole, the inner space of the end cap communicates with the first wet air inlet and the second wet air inlet, and wet air introduced into the wet air inlet of the end cap may pass through the inner space and be introduced into the first wet air inlet and the second wet air inlet.

According to an embodiment of the present disclosure, the fuel cell membrane humidifier having a plurality of humidification modules connected thereto, includes an end cap including an inner space and a wet air outlet that is open to the outside while communicating with the inner space, wherein the first wet air outlet is inserted into the first coupling hole of the connection member, and the second wet air outlet is inserted into the second coupling hole, the inner space of the end cap communicates with the first wet air outlet and the second wet air outlet, and air discharged from the first wet air outlet and the second wet air outlet may pass through the inner space and be discharged via the wet air outlet of the end cap.

According to an embodiment of the present disclosure, in the fuel cell membrane humidifier having a plurality of humidification modules connected thereto, a size of the first coupling hole may be different from a size of the second coupling hole provided in the connection member.

According to an embodiment of the present disclosure, in the fuel cell membrane humidifier having a plurality of humidification modules connected thereto, a thickness of the connection member at a point where the first coupling hole, into which the first wet air inlet or the first wet air outlet is inserted, is provided may be greater than a thickness of the connection member at a point where the second coupling hole, into which the second wet air inlet or the second wet air outlet is inserted, is provided.

According to an embodiment of the present disclosure, in the fuel cell membrane humidifier having a plurality of humidification modules connected thereto, sealing members may be provided between the first coupling hole and the first wet air inlet or between the first coupling hole and the first wet air outlet, and between the second coupling hole and the second wet air inlet, or between the second coupling hole and the second wet air outlet.

### Advantageous Effects

The present disclosure relates to a fuel cell membrane humidifier having multiple humidification modules connected in parallel, and the present disclosure has an advantage capable of using multiple humidification modules connected in parallel through a connection member connecting the multiple humidification modules and an end cap coupled to the connection member.

Furthermore, the present disclosure has an advantage of improving space utilization inside a system by using a plurality of humidification modules connected in parallel through a connection member connecting the plurality of humidification modules and an end cap coupled to the connection member.

Furthermore, the present disclosure has an advantage capable of using a plurality of humidification modules while ensuring freedom in system design by connecting the plurality of humidification modules in parallel through a connection member connecting the plurality of humidification modules and an end cap coupled to the connection member.

In addition, the present disclosure has an advantage of applying a membrane humidifier to a high-capacity fuel cell system by connecting a plurality of humidification modules in parallel through a connection member connecting the plurality of humidification modules and an end cap coupled to the connection member.

### Description of Drawings

FIG. 1 is a view illustrating a humidification module according to an embodiment of the present disclosure.
FIG. 2 is a view showing a first humidification module and a second humidification module arranged in parallel in order to arrange an air inlet or an air outlet in parallel, according to an embodiment of the present disclosure.
FIG. 3 is a view showing a connection member coupled to a first humidification module and a second humidification module, according to an embodiment of the present disclosure.
FIG. 4 is a view illustrating an end cap coupled to a connection member, according to an embodiment of the present disclosure.
FIG. 5 is a view showing a first coupling hole and a second coupling hole of a connection member, which are formed to have different sizes, according to an embodiment of the present disclosure.
FIG. 6 is a view illustrating that a thickness of a connecting member at a point where a first coupling hole, into which a first humidification module is inserted, is provided is greater than a thickness of a connecting member at a point where a second coupling hole, into which a second humidification module is inserted, is provided, according to an embodiment of the present disclosure.
FIG. 7 is a view showing a first humidification module and a second humidification module arranged in parallel in order to arrange a wet air inlet or a wet air outlet in parallel, according to an embodiment of the present disclosure.
FIG. 8 is a view illustrating that a connection member is coupled to a first humidification module and a second humidification module and an end cap is coupled to the connection member, according to an embodiment of the present disclosure.
FIG. 9 is a cross-sectional view taken along line A-A' of FIG. 8.

### Best Mode

### Mode for Invention

The disclosure will be described more fully hereinafter with reference to the accompanying drawings, in which embodiments according to the inventive concept are shown, and the principle of the inventive concept is described so that the embodiments may be practiced by those skilled in the art. The disclosed embodiments may be implemented in various forms.

Expressions such as "including" or "may include" that may be used in various embodiments of the inventive concept indicate the existence of a corresponding function, operation, component, or the like that is disclosed, and do not limit one or more additional functions, operations, components, or the like. In addition, in various embodiments according to the inventive concept, terms such as "comprises," "has," or "consists of" are intended to refer to the presence of features, numbers, steps, operations, components, parts, or combinations thereof described in the specification, but it should be understood that the terms do not preclude the existence or addition of one or more other features, numbers, steps, operations, components, parts, or combinations thereof.

When it is said that a component is "connected and coupled" to another component, it should be understood that said component may be directly connected or coupled to said other component, but there may also be new other components between said component and said other component. In addition, when it is said that a component is "directly connected" or "directly coupled" to another component, it should be understood that no new component exists between said component and said other component.

The terms first, second, etc. used in the disclosure may be used to describe various components, but the components should not be limited by terms. The terms are used only for the purpose of distinguishing one component from other components.

The present disclosure relates to a fuel cell membrane humidifier having multiple humidification modules connected in parallel, and the present disclosure relates to a fuel cell membrane humidifier with multiple humidification modules connected in parallel through a connection member connecting the multiple humidification modules and an end cap coupled to the connection member. Hereinafter, preferred embodiments of the inventive concept are described in detail with reference to the accompanying drawings.

A fuel cell membrane humidifier in which a plurality of humidification modules are connected in parallel according to an embodiment of the present disclosure includes a first humidification module 110, a second humidification module 210, and a connection member 150.

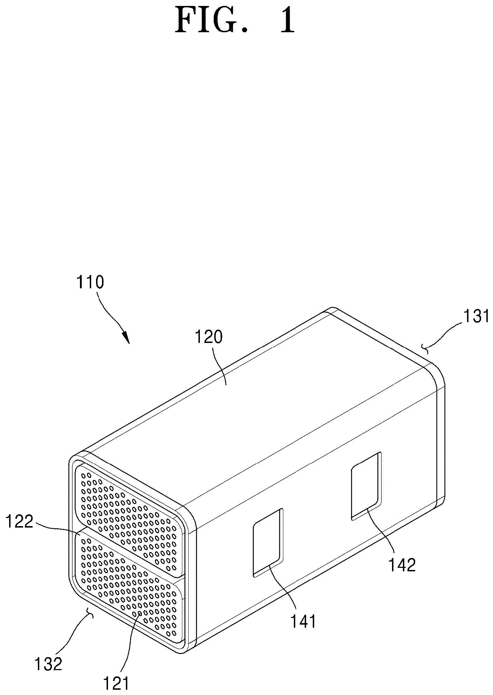

The first humidification module 110 and the second humidification module 210 may humidify gas to be supplied to a fuel cell stack. The first humidification module 110 and the second humidification module 210 may have the same structure, and FIG. 1 shows the first humidification module 110.

However, embodiments are not limited thereto, and the first humidification module 110 and the second humidification module 210 may have the same structure but have different sizes. In addition, the first humidification module 110 and the second humidification module 210 may have different structures.

Referring to FIG. 1, the first humidification module 110 may include a first mid-case 120 in which one or more humidification membranes 121 or a plurality of humidification membranes 121 are arranged. The first mid-case 120 may be a housing of the first humidification module 110, and may humidify gas to be supplied to a stack through the humidification membrane 121. According to an embodiment of the present disclosure, the humidification membrane 121 may be a hollow fiber membrane.

According to an embodiment of the present disclosure, the first mid-case 120 may include a cartridge 122 on which one or more humidification membranes 121 are arranged. The cartridge 122 may include an inner case in which at least one humidification membrane 121 is arranged, and the cartridge 122 may be a unit module in which at least one humidification membrane 121 is arranged. A plurality of cartridges 122 may be provided in the first mid-case 120.

Referring to FIG. 1, a first air inlet 131 may be provided at one side of the first humidification module 110, and a first air outlet 132 may be provided at the other side of the first humidification module 110.

The first air inlet 131 is provided at one side of the first humidification module 110, and dry air may be introduced into the first humidification module 110 through the first air inlet 131. Dry air may be humidified in the first humidification module 110 by exchanging moisture with wet air.

According to an embodiment of the present disclosure, the first air inlet 131 and the first air outlet 132 may be open parts from one side and the other side of the first humidification module 110 so that dry air may move.

According to an embodiment of the present disclosure, the first air inlet 131 may be a part that is open to the outside from one side of the first humidification module 110 as shown in FIG. 1 so as to introduce dry air. However, embodiments are not limited thereto, and the first air inlet 131 may be provided in an end cap coupled to the first humidification module 110.

The first air outlet 132 may be provided at the other side of the first humidification module 110, dry air may be humidified by the first humidification module 110, and the humidified dry air may be discharged through the first air outlet 132.

According to an embodiment of the present disclosure, the first air outlet 132 may be a part that is open from the other side of the first humidification module 110 to the outside, as shown in FIG. 1, so that humidified dry air may be discharged. However, embodiments are not limited thereto, and the first air inlet 131 may be provided in an end cap coupled to the first humidification module 110.

The second humidification module 210 may have the same structure as the first humidification module 110, and the second humidification module 210 may have the same structure as the first humidification module 110 but have different sizes. In addition, the first humidification module 110 and the second humidification module 210 may have different structures.

The second humidification module 210 may include a second mid-case 220 in which one or more humidification membranes 221 or a plurality of humidification membranes 221 are arranged. The second mid-case 220 may be a housing of the second humidification module 210, and may humidify gas to be supplied to a stack through the humidification membrane 221. According to an embodiment of the present disclosure, the humidification membrane 221 may be a hollow fiber membrane.

According to an embodiment of the present disclosure, the second mid-case 220 may include a cartridge 222 on which one or more humidification membranes are arranged. The cartridge 122 may include an inner case in which at least one humidification membrane 221 is arranged, and the cartridge 222 may be a unit module in which at least one humidification membrane 221 is arranged. A plurality of cartridges 222 may be provided in the second mid-case 220.

A second air inlet 231 may be provided at one side of the second humidification module 210, and a second air outlet 232 may be provided at the other side of the second humidification module 210.

The second air inlet 231 is provided at one side of the second humidification module 210, and dry air may be introduced into the second humidification module 210 through the second air inlet 231. Dry air may be humidified in the second humidification module 210 by exchanging moisture with wet air.

According to an embodiment of the present disclosure, the second air inlet 231 and the second air outlet 232 may be open parts from one side and the other side of the second humidification module 210 so that dry air may move.

According to an embodiment of the present disclosure, the second air inlet 231 may be a part that is open to the outside from one side of the second humidification module 210 so as to introduce dry air. However, embodiments are not limited thereto, and the second air inlet 231 may be provided in an end cap coupled to the second humidification module 210.

The second air outlet 232 may be provided at the other side of the second humidification module 210, dry air may be humidified by the second humidification module 210, and the humidified dry air may be discharged through the second air outlet 232.

According to an embodiment of the present disclosure, the second air outlet 232 may be a part that is open to the outside from the other side of the second humidification module 210 so as to discharge the humidified dry air. However, embodiments are not limited thereto, and the second air inlet 231 may be provided in an end cap coupled to the second humidification module 210.

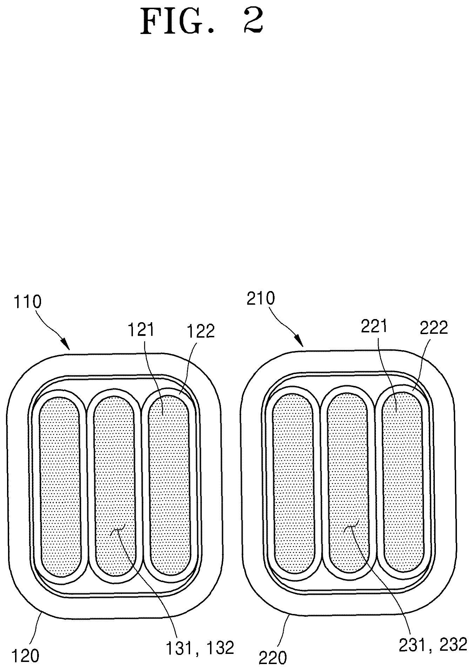

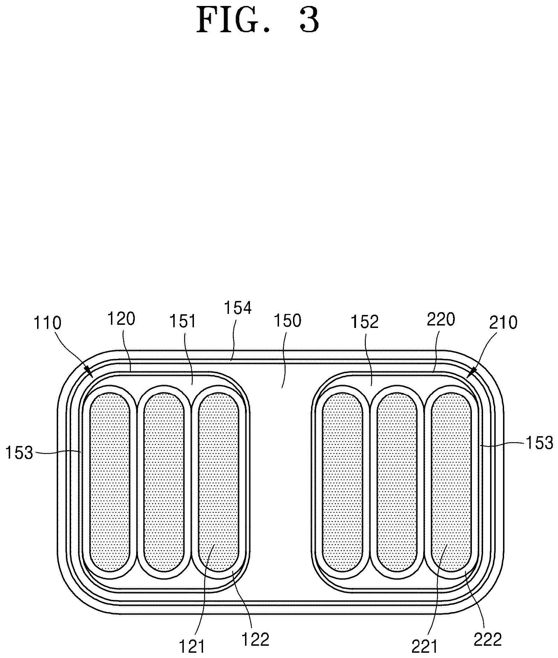

Referring to FIGS. 2 and 3, the connection member 150 includes a first coupling hole 151 into which the first humidification module 110 may be inserted and a second coupling hole 152 into which the second humidification module 210 may be inserted.

When the first humidification module 110 and the second humidification module 210 are arranged in parallel as shown in FIG. 2, the connection member 150 may connect and fix the first humidification module 110 and the second humidification module 210 to each other. According to an embodiment of the present disclosure, the connection member 150 may be a housing in which the first coupling hole 151 and the second coupling hole 152 are provided.

According to an embodiment of the present disclosure, one side of the first humidification module 110 provided with the first air inlet 131 may be inserted into the first coupling hole 151 of the connection member 150, and one side of the second humidification module 210 provided with the second air inlet 231 may be inserted into the second coupling hole 152 of the connection member 150.

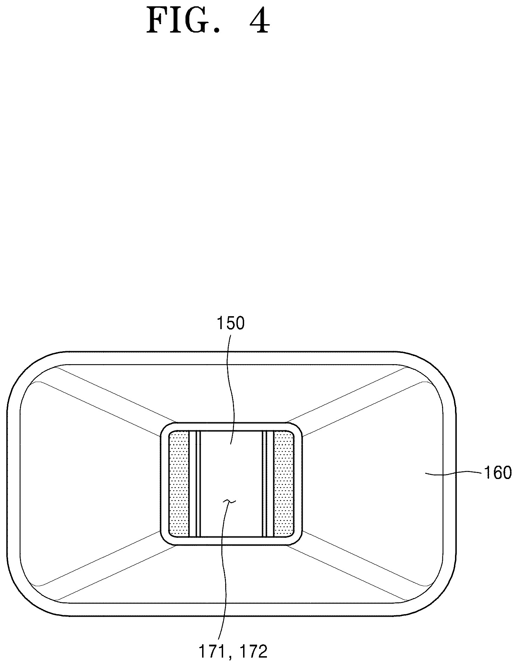

Referring to FIG. 4, the fuel cell membrane humidifier to which a plurality of humidification modules are connected according to an embodiment of the present disclosure may include an end cap 160 having an inner space 161 and an air inlet 171 that is open to the outside while communicating with the inner space 161.

The end cap 160 may be coupled to the connection member 150, and the end cap 160 may be provided with one air inlet 171. Air introduced into the air inlet 171 may be introduced into the first air inlet 131 of the first humidification module 110 and the second air inlet 231 of the second humidification module 210 through the internal space 161.

Specifically, the internal space 161 of the end cap 160 may communicate with the first air inlet 131 of the first humidification module 110 and the second air inlet 231 of the second humidification module 210.

Accordingly, air introduced into the air inlet 171 of the end cap 160 may pass through the inner space 161 and may be introduced into the first air inlet 131 of the first humidification module 110 and the second air inlet 231 of the second humidification module 210.

According to an embodiment of the present disclosure, the other side of the first humidification module 110 provided with the first air outlet 132 may be inserted into the first coupling hole 151 of the connection member 150, and the other side of the second humidification module 210 provided with the second air outlet 232 may be inserted into the second coupling hole 152 of the connection member 150.

Referring to FIG. 4, the fuel cell membrane humidifier to which a plurality of humidification modules are connected according to an embodiment of the present disclosure may include an end cap 160 having an inner space 161 and an air outlet 172 that is open to the outside while communicating with the inner space 161.

The end cap 160 may be coupled to the connection member 150, and the end cap 160 may be provided with one air outlet 172. Air discharged through the first air outlet 132 of the first humidification module 110 and the second air outlet 232 of the second humidification module 210 may pass through the inner space 161 of the end cap 160 and may be discharged through the air outlet 172.

Specifically, the internal space 161 of the end cap 160 may communicate with the first air outlet 132 of the first humidification module 110 and the second air outlet 232 of the second humidification module 210.

Accordingly, the air discharged through the first air outlet 132 of the first humidification module 110 and the second air outlet 232 of the second humidification module 210 may pass through the inner space 161 of the end cap 160 and be discharged through the air outlet 172 of the end cap 160.

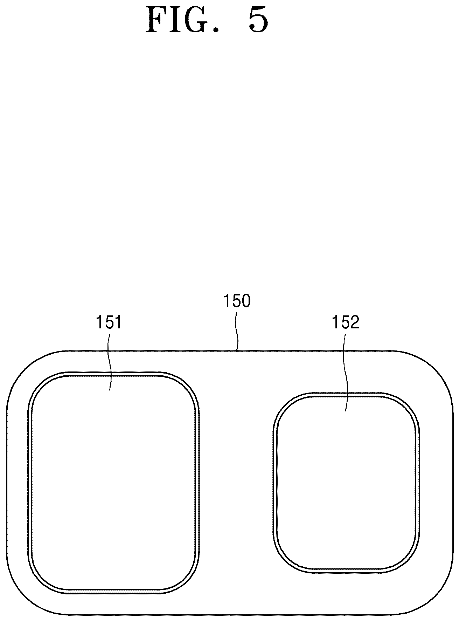

Referring to FIG. 5, the size of the first coupling hole 151 and the size of the second coupling hole 152 of the connection member 150 according to the embodiment of this disclosure may be different from each other.

As described above, the first humidification module 110 and the second humidification module 210 may have different sizes. The first coupling hole 151 and the second coupling hole 152 may have sizes corresponding to the sizes of the first humidification module 110 and the second humidification module 210 so that the first humidification module 110 and the second humidification module 210 are inserted into the first coupling hole 151 and the second coupling hole 152, respectively.

When the first humidification module 110 and the second humidification module 210 have different sizes, the size of the first coupling hole 151 and the size of the second coupling hole 152 may have different sizes.

Specifically, when the cross-sectional areas of the portions in the first humidification module 110 and the second humidification module 210, which are respectively inserted into the first coupling hole 151 and the second coupling hole 152 are different from each other, the size of the first coupling hole 151 and the size of the second coupling hole 152 may be different.

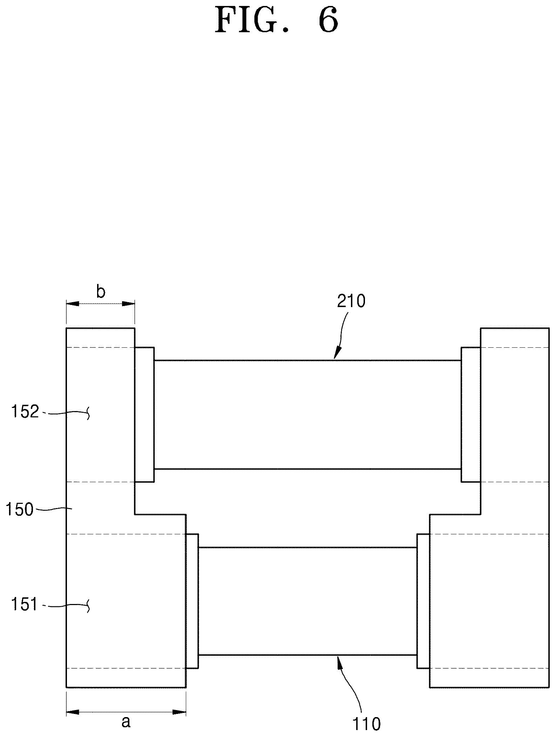

Referring to FIG. 6, a thickness (a) of the connection member 150 at a point where the first coupling hole 151, into which the first humidification module 110 is inserted, is provided may be greater than a thickness (b) of the connection member 150 at a point where the second coupling hole 152, into which the second humidification module 210 is inserted, is provided.

As described above, the first humidification module 110 and the second humidification module 210 may have different sizes, and the lengths of the first humidification module 110 and the second humidification module 210 may be different from each other.

Depending on the length of the first humidification module 110 and the second humidification module 210, the thickness (a) of the connection member 150 at the point where the first coupling hole 151, into which the first humidification module 110 is inserted, is provided and the thickness (b) of the connection member 150 at the point where the second coupling hole 152, into which the second humidification module 210 is inserted, is provided may be formed differently from each other.

Specifically, a thickness of the connection member may be made greater at a point of the coupling hole into which the short humidification module is inserted, and a thickness of the connection member may be made less at a point of the coupling hole into which the long humidification module is inserted.

FIG. 6 illustrates a case in which the length of the first humidification module 110 is less than the length of the second humidification module 210. Since the length of the first humidification module 110 is less than the length of the second humidification module 210, the thickness (a) of the connection member 150 at the point where the first coupling hole 151, into which the first humidification module 110 is inserted, is provided may be greater than the thickness (b) of the connection member 150 at the point where the second coupling hole 152, into which the second humidification module 210 is inserted, is provided.

Referring to FIG. 3, first sealing members 153 may be provided between the first coupling hole 151 of the connection member 150 and the first humidification module 110, and between the second coupling hole 152 of the connection member 150 and the second humidification module 210, respectively.

The first sealing members 153 may seal a gap between the first humidification module 110 and the first coupling hole 151 and between the second humidification module 210 and the second coupling hole 152.

When a plurality of humidification modules are connected according to an embodiment of the present disclosure, air leakage that may occur between the first humidification module 110, the second humidification module 210, and the connection member 150 may be prevented through the first sealing members 153.

Referring to FIG. 3, a second sealing member 154 may be provided between the connection member 150 and the end cap 160. The second sealing member 154 may seal a gap between the connection member 150 and the end cap 160.

When a plurality of humidification modules are connected according to an embodiment of the present disclosure, air leakage that may occur between the connection member 150 and the end cap 160 may be prevented through the second sealing member 154.

Hereinafter, in the fuel cell membrane humidifier in which a plurality of humidification modules are connected in parallel according to an embodiment of the present disclosure, a connection member connecting a wet air inlet with a wet air outlet of will be described.

Referring to FIG. 1, the first humidification module 110 may be provided with a first wet air inlet 141 and a first wet air outlet 142. The first wet air inlet 141 and the first wet air outlet 142 may be provided on the same surface of the first mid-case 120 as shown in FIG. 1. However, embodiments are not limited thereto, and the first wet air inlet 141 and the first wet air outlet 142 may be provided on the different surfaces of the first mid-case 120.

The high-temperature and high-humidity wet air discharged from a fuel cell stack may be introduced into the first humidification module 110 through the first wet air inlet 141. The wet air introduced into the first humidification module 110 through the first wet air inlet 141 exchanges moisture with the dry air, and then the wet air may be discharged through the first wet air outlet 142.

According to an embodiment of the present disclosure, the first wet air inlet 141 may be a part open to the outside of the first humidification module 110 to allow the wet air to be introduced thereinto. However, embodiments are not limited thereto, and a wet air inlet port may be provided in the first wet air inlet 141.

The first wet air outlet 142 may discharge the wet air introduced into the first humidification module 110. According to an embodiment of the present disclosure, the first wet air outlet 142 may be a part open to the outside from the first humidification module 110 so that wet air may be discharged. However, embodiments are not limited thereto, and a wet air outlet port may be provided in the first wet air outlet 142.

The second humidification module 210 may be provided with a second wet air inlet 241 and a second wet air outlet 242. The second wet air inlet 241 and the second wet air outlet 242 may be provided on the same surface of the second mid-case 220. However, embodiments are not limited thereto, and the second wet air inlet 241 and the second wet air outlet 242 may be provided on the different surfaces of the second mid-case 220.

The high-temperature and high-humidity wet air discharged from a fuel cell stack may be introduced into the second humidification module 210 through the second wet air inlet 241. The wet air introduced into the second humidification module 210 through the second wet air inlet 241 exchanges moisture with the dry air, and then the wet air may be discharged through the second wet air outlet 242.

According to an embodiment of the present disclosure, the second wet air inlet 241 may be a part open to the outside of the second humidification module 210 to allow the wet air to be introduced thereinto. However, embodiments are not limited thereto, and a wet air inlet port may be provided in the second wet air inlet 241.

The second wet air outlet 242 may discharge the wet air introduced into the second humidification module 210. According to an embodiment of the present disclosure, the second wet air outlet 242 may be a part open to the outside from the second humidification module 210 so that wet air may be discharged. However, embodiments are not limited thereto, and a wet air outlet port may be provided in the second wet air outlet 242.

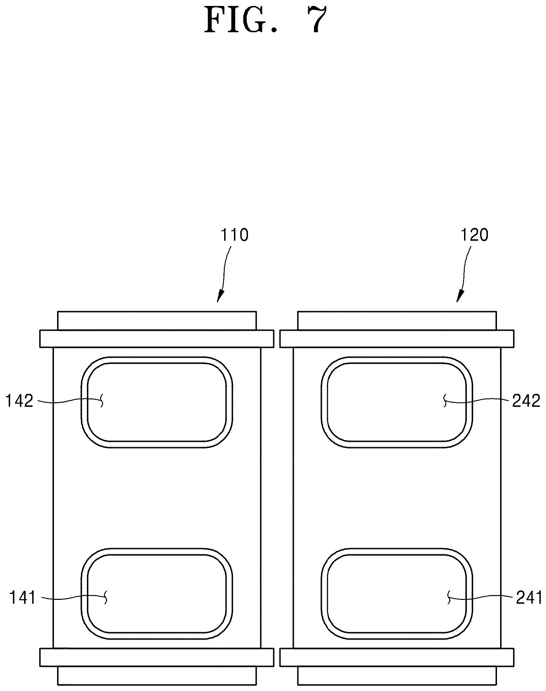

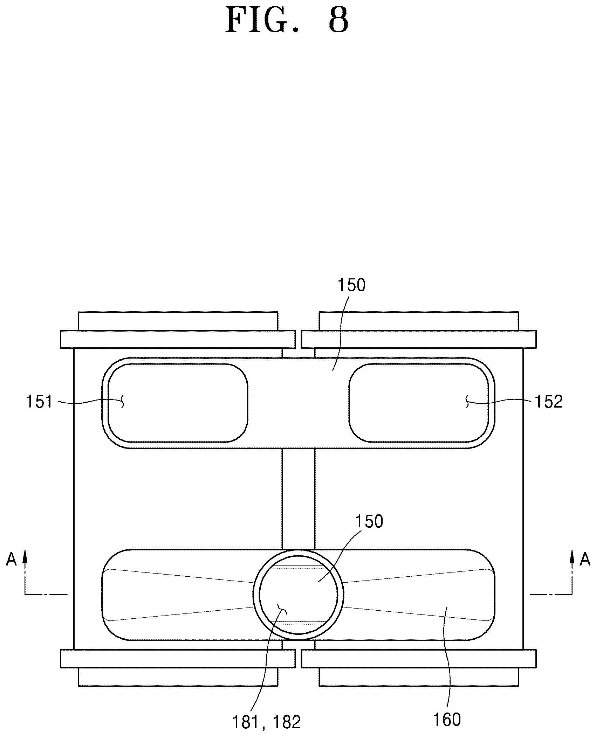

Referring to FIGS. 7 and 8, the connection member 150 includes a first coupling hole 151 into which the first wet air inlet 141 or the first wet air outlet 142 may be inserted, and a second coupling hole 152 into which the second wet air inlet 241 or the second wet air outlet 242 may be inserted.

When the first humidification module 110 and the second humidification module 210 are arranged in parallel as shown in FIG. 7, the connection member 150 may connect and fix the first humidification module 110 and the second humidification module 210 to each other. According to an embodiment of the present disclosure, the connection member 150 may be a housing in which the first coupling hole 151 and the second coupling hole 152 are provided.

According to an embodiment of the present disclosure, the first wet air inlet 141 may be inserted into the first coupling hole 151 of the connection member 150, and the second wet air inlet 241 may be inserted into the second coupling hole 152 of the connection member 150.

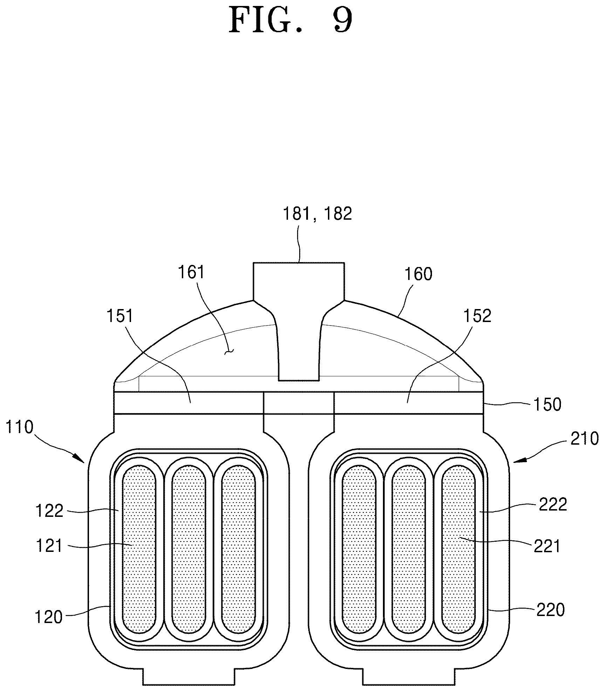

Referring to FIGS. 8 and 9, the fuel cell membrane humidifier to which a plurality of humidification modules are connected according to an embodiment of the present disclosure may include an end cap 160 having an inner space 161 and a wet air inlet 181 that is open to the outside while communicating with the inner space 161.

The end cap 160 may be coupled to the connection member 150, and the end cap 160 may be provided with one wet air inlet 181. Wet air introduced into the wet air inlet 181 may pass through the inner space 161 and be introduced into the first wet air inlet 141 and the second wet air inlet 241.

Specifically, the inner space 161 of the end cap 160 may communicate with the first wet air inlet 141 and the second wet air inlet 241. Accordingly, the wet air introduced into the wet air inlet 181 of the end cap 160 may pass through the inner space 161 and be introduced into the first wet air inlet 141 and the second wet air inlet 241.

According to an embodiment of the present disclosure, the first wet air outlet 142 may be inserted into the first coupling hole 151 of the connection member 150, and the second wet air outlet 242 may be inserted into the second coupling hole 152 of the connection member 150.

Referring to FIGS. 8 and 9, the fuel cell membrane humidifier to which a plurality of humidification modules are connected according to an embodiment of the present disclosure may include an end cap 160 having an inner space 161 and a wet air outlet 182 that is open to the outside while communicating with the inner space 161.

The end cap 160 may be coupled to the connection member 150, and the end cap 160 may be provided with one wet air outlet 182. The wet air discharged from the first wet air outlet 142 and the second wet air outlet 242 may pass through the inner space 161 and be discharged through the wet air outlet 182 of the end cap 160.

Specifically, the inner space 161 of the end cap 160 may communicate with the first wet air outlet 142 and the second wet air outlet 242. In this way, the wet air discharged from the first wet air outlet 142 and the second wet air outlet 242 may pass through the inner space 161 and be discharged through the wet air outlet 182 of the end cap 160.

The size of the first coupling hole 151 and the size of the second coupling hole 152 of the connection member 150 according to the embodiment of this disclosure may be different from each other.

As described above, the first humidification module 110 and the second humidification module 210 may have different sizes. The first wet air inlet 141 or the first humid air outlet 142 of the first humidification module 110, and the second wet air inlet 241 or the second wet air outlet 242 of the second humidification module 210, may be inserted into the first coupling hole 151 and the second coupling hole 152, respectively.

When the first humidification module 110 and the second humidification module 210 have different sizes, the size of the first coupling hole 151 and the size of the second coupling hole 152 may have different sizes.

Specifically, when the cross-sectional areas of the portions in the first humidification module 110 and the second humidification module 210, which are respectively inserted into the first coupling hole 151 and the second coupling hole 152 are different from each other, the size of the first coupling hole 151 and the size of the second coupling hole 152 may be different from each other.

A thickness (a) of the connection member 150 at a point where the first coupling hole 151, into which the first wet air inlet 141 or the first wet air outlet 142 of the first humidification module 110 is inserted, is provided may be greater than a thickness (b) of the connection member 150 at a point where the second coupling hole 152, into which the second wet air inlet 241 or the second wet air outlet 242 of the second humidification module 210 is inserted, is provided.

As described above, the first humidification module 110 and the second humidification module 210 may have different sizes, and the heights of the first humidification module 110 and the second humidification module 210 may be different from each other.

According to the heights of the first humidification module 110 and the second humidification module 210, the thickness (a) of the connection member 150 at the point where the first coupling hole 151, into which the first humidification module 110 is inserted, is provided and the thickness (b) of the connection member 150 at the point where the second coupling hole 152, into which the second humidification module 210 is inserted, is provided may be formed differently from each other.

Specifically, a thickness of the connection member may be made greater at a point of the coupling hole into which the low humidification module is inserted, and a thickness of the connection member may be made less at a point of the coupling hole into which the high humidification module is inserted.

A height of the first humidification module 110 may be less than a height of the second humidification module 210. Since the height of the first humidification module 110 is less than the height of the second humidification module 210, a thickness (a) of the connection member 150 at a point where the first coupling hole 151, into which the first wet air inlet 141 or the first wet air outlet 142 of the first humidification module 110 is inserted, is provided may be greater than a thickness (b) of the connection member 150 at a point where the second coupling hole 152, into which the second wet air inlet 241 or the second wet air outlet 242 of the second humidification module 210 is inserted, is provided.

Referring to FIGS. 7 and 8, first sealing members 153 may be provided between the first coupling hole 151 and the first wet air inlet 141 or between the first coupling hole 151 and the first wet air outlet 142, of the connection member 150, and between the second coupling hole 152 and the second wet air inlet 241 or between the second coupling hole 152 and the second wet air outlet 242 of the connection member 150, respectively.

The first sealing members 153 may seal a gap between the first coupling hole 151 and the first wet air inlet 141 or between the first coupling hole 151 and the first wet air outlet 142, and between the second coupling hole 152 and the second wet air inlet 241, or between the second coupling hole 152 and the second wet air outlet 242.

When a plurality of humidification modules are connected according to an embodiment of the present disclosure, air leakage that may occur between the first humidification module 110, the second humidification module 210, and the connection member 150 may be prevented through the first sealing members 153.

A second sealing member 154 may be provided between the connection member 150 and the end cap 160. The second sealing member 154 may seal a gap between the connection member 150 and the end cap 160.

When a plurality of humidification modules are connected according to an embodiment of the present disclosure, air leakage that may occur between the connection member 150 and the end cap 160 may be prevented through the second sealing member 154.

The fuel cell membrane humidifier in which a plurality of humidification modules are connected in parallel according to an embodiment of the present disclosure described above has the following effects.

The fuel cell membrane humidifier having multiple humidification modules connected in parallel, has an advantage capable of using multiple humidification modules connected in parallel through a connection member connecting the multiple humidification modules and an end cap coupled to the connection member.

Furthermore, the fuel cell membrane humidifier, in which multiple humidification modules are connected in parallel according to the embodiment of the present disclosure, has an advantage of reducing pressure and heat loss by connecting multiple humidification modules in parallel through a connection member made up of separate housings while having a first coupling hole and a second coupling hole without using a separate hose or pipeline.

Furthermore, the fuel cell membrane humidifier, in which multiple humidification modules are connected in parallel according to the embodiment of the present disclosure, has an advantage of simplifying a configuration of a system by connecting multiple humidification modules in parallel through a connection member made up of separate housings while having a first coupling hole and a second coupling hole without using a separate hose or pipeline.

In addition, the fuel cell membrane humidifier having multiple humidification modules connected in parallel, according to the embodiment of the present disclosure, has an advantage capable of improving space utility in a system by using multiple humidification modules connected in parallel through a connection member connecting the multiple humidification modules and an end cap coupled to the connection member.

In addition, the fuel cell membrane humidifier having multiple humidification modules connected in parallel, has an advantage capable of using multiple humidification modules while securing a freedom of designing a system by using the multiple humidification modules connected in parallel through a connection member connecting the multiple humidification modules and an end cap coupled to the connection member.

In addition, the fuel cell membrane humidifier having multiple humidification modules connected in parallel, according to the embodiment of the present disclosure, has an advantage capable of applying the fuel cell membrane humidifier to a high-capacity fuel cell system by using multiple humidification modules connected in parallel through a connection member connecting the multiple humidification modules and an end cap coupled to the connection member.

Although the present disclosure has been described with reference to embodiments illustrated in the drawings, this is merely an example, and it will be understood by those skilled in the art that various modifications and variations may be made therefrom. Therefore, the true technical protection scope of the present disclosure should be determined by the technical spirit of the appended claims.

## Claims

1. A fuel cell membrane humidifier having a plurality of humidification modules connected thereto, the fuel cell membrane humidifier comprising:
a first humidification module including a first air inlet on one side thereof, a first air outlet on the other side thereof, and a first mid-case in which at least one humidification membrane is arranged;
a second humidification module including a second air inlet on one side thereof, a second air outlet on the other thereof, and a second mid-case in which at least one humidification membrane is arranged; and
a connection member including a first coupling hole into which the first humidification module is inserted and a second coupling hole into which the second humidification module is inserted.

2. The fuel cell membrane humidifier of claim 1, wherein one side of the first humidification module including the first air inlet is inserted into the first coupling hole of the connection member, and one side of the second humidification module including the second air inlet is inserted into the second coupling hole of the connection member.

3. The fuel cell membrane humidifier of claim 2, further comprising an end cap including an inner space and an air inlet that is open to the outside while communicating with the inner space, wherein the inner space of the end cap communicates with the first air inlet of the first humidification module and the second air inlet of the second humidification module, and air introduced into the air inlet of the end cap passes through the inner space and is introduced into the first air inlet of the first humidification module and the second air inlet of the second humidification module.

4. The fuel cell membrane humidifier of claim 1, wherein the other side of the first humidification module including the first air outlet is inserted into the first coupling hole of the connection member, and the other side of the second humidification module including the second air outlet is inserted into the second coupling hole of the connection member.

5. The fuel cell membrane humidifier of claim 4, further comprising an end cap including an inner space and an air outlet that is open to the outside while communicating with the inner space, wherein the inner space of the end cap communicates with the first air outlet of the first humidification module and the second air outlet of the second humidification module, and air discharged from the first air outlet of the first humidification module and the second air outlet of the second humidification module passes through the inner space and is discharged via the air outlet of the end cap.

6. The fuel cell membrane humidifier of claim 1, wherein a size of the first coupling hole is different from a size of the second coupling hole provided in the connection member.

7. The fuel cell membrane humidifier of claim 1, wherein a thickness of the connection member at a point where the first coupling hole is inserted into the first humidification module is greater than a thickness of the connection member at a point where the second coupling hole is inserted into the second humidification module.

8. The fuel cell membrane humidifier of claim 1, wherein first sealing members are provided between the first coupling hole of the connection member and the first humidification module, and between the second coupling hole of the connection member and the second humidification module, respectively.

9. A fuel cell membrane humidifier having a plurality of humidification modules connected thereto, the fuel cell membrane humidifier comprising:
a first humidification module including a first wet air inlet and a first wet air outlet, and a first mid-case in which at least one humidification membrane is arranged;
a second humidification module including a second wet air inlet and a second wet air outlet, and a second mid-case in which at least one humidification membrane is arranged; and
a connection member including a first coupling hole into which the first wet air inlet or the first wet air outlet is inserted, and a second coupling hole into which the second wet air inlet or the second wet air outlet is inserted.

10. The fuel cell membrane humidifier of claim 9, further comprising an end cap including an inner space and a wet air inlet that is open to the outside while communicating with the inner space, wherein the first wet air inlet is inserted into the first coupling hole of the connection member, and the second wet air inlet is inserted into the second coupling hole, the inner space of the end cap communicates with the first wet air inlet and the second wet air inlet, and wet air introduced into the wet air inlet of the end cap passes through the inner space and is introduced into the first and second wet air inlets.

11. The fuel cell membrane humidifier of claim 9, further comprising an end cap including an inner space and a wet air outlet that is open to the outside while communicating with the inner space, wherein the first wet air outlet is inserted into the first coupling hole of the connection member, and the second wet air outlet is inserted into the second coupling hole, the inner space of the end cap communicates with the first wet air outlet and the second wet air outlet, and air discharged from the first wet air outlet and the second wet air outlet passes through the inner space and is discharged via the wet air outlet of the end cap.

12. The fuel cell membrane humidifier of claim 9, wherein a size of the first coupling hole provided in the connection member is different from a size of the second coupling hole provided in the connection member.

13. The fuel cell membrane humidifier of claim 9, wherein a thickness of the connection member at a point where the first coupling hole, into which the first wet air inlet or the first wet air outlet is inserted, is provided is greater than a thickness of the connection member at a point where the second coupling hole, into which the second wet air inlet or the second wet air outlet is inserted, is provided.

14. The fuel cell membrane humidifier of claim 9, wherein sealing members are provided between the first coupling hole and the first wet air inlet or between the first coupling hole and the first wet air outlet, and between the second coupling hole and the second wet air inlet, or between the second coupling hole and the second wet air outlet.
